Europäisches Patentamt

European Patent Office

Office européen des brevets

(11) Publication number: **0 404 209**
**A1**

# EUROPEAN PATENT APPLICATION

(21) Application number: **90115677.8**

(22) Date of filing: **29.04.86**

(51) Int. Cl.⁵: **H05B 1/02, G05D 23/19, H05B 6/06**

This application was filed on 16 - 08 - 1990 as a divisional application to the application mentioned under INID code 60.

(30) Priority: **28.06.85 US 749637**

(43) Date of publication of application:
**27.12.90 Bulletin 90/52**

(60) Publication number of the earlier application in accordance with Art.76 EPC: **0 209 215**

(84) Designated Contracting States:
**AT BE CH DE FR GB IT LI SE**

(71) Applicant: **METCAL INC.**
**1530 O'Brien Drive**
**Menlo Park California 94025(US)**

(72) Inventor: **Hall, William D.**
**10850 Stanmore Drive**
**Potomac, Maryland 20854(US)**

(74) Representative: **Hayward, Denis Edward Peter et al**
**Lloyd Wise, Tregear & Co. Norman House**
**105-109 Strand**
**London WC2R 0AE(GB)**

(54) **Ferromagnetic element with temperature regulation.**

(57) A ferromagnetic element has current passed through it either by direct electrical connections or by induction. The current through the ferromagnetic element may be far greater than is necessary to heat the element above its effective Curie temperature. As the element is heated and is passing through its effective Curie transition (that is its temperature is rising from below its effective Curie temperature to, or above, its effective Curie temperature) the change in permeability of the element is sensed and the current through the element is cut off. The element then cools. When the temperature falls below the effective Curie temperature, the full current is restored. The heating and cooling process repeats itself indefinitely. The result is that the element is maintained at its effective Curie by a pulsating current fed to the element. The Curie transition may be sensed by directly sensing changes in permeability as by an auto-transformer winding, on the element; or by sensing changes in the power to the element by reason of the change in resistance of the element as it passes through the effective Curie temperature.

## FIG. 4

EP 0 404 209 A1

# FERROMAGNETIC ELEMENT WITH TEMPERATURE REGULATION

This invention relates to ferromagnetic elements possessing temperature regulation whn electrically heated.

It is old and well known to regulate the temperature of a ferromagnetic element by passing a radio frequency current through it. The current heat-the element to its effective Curie temperature where, due to a change in permeability of the element, the power drawn by the element declines, and therefore the device will hold its temperature constant. The "effective" Curie is the temperature at which the device regulates its temperature and is 50-100° C below the actual published Curie temperature. Hereafter, when we refer to Curie it should be understood that we are referring to the effective Curie, unless otherwise stated. The current may be fed through the ferromagnetic element directly, as by electrical conductors connected between the element and a source of current, or by induction. However, the known prior art employing a pure ferromagnetic element has the drawback that it will not hold the temperature constant over a wide range of cooling loads.

An improvement in the aforesaid temperature regulation method is shown and described in U.S. Patent 4,256,945, issued March 17, 1981, to Philip S. Carter and John F. Krumme, entitled Alternating Current Electrically Resistive Heating Element Having Intrinsic Temperature Control. This patent teaches that the temperature regulation may be improved if the ferromagnetic element surrounds a copper substrate. Below the effective Curie the current is driven into the ferromagnetic surface layer by strong skin effect forces. When the temperature rises above the effective Curie temperature the skin effect is not strong due to the change in permeability of the ferromagnetic material, and at least some of the current retreats into the copper. This results in a sharp drop in power; since the current is held constant throughout the process. Hence, it is possible to design such a device that holds its temperature constant over a wider range of thermal cooling loads than was the case with the ferromagnetic element.

The Carter-Krumme patent in col. 7 states the effectiveness of the device in terms of

$$\frac{R_{max}}{R_{min}}$$

where $R_{max}$ is the resistance of the device below Curie and $R_{min}$ is the resistance of the device above Curie.

The Carter-Krumme patent teaches that the preferred frequency range is 8 to 20MHz.

With the present invention pure ferromagnetic element is preferably used; although a composite element such as that taught by the Carter-Krumme patent could be used.

Radio frequency current, preferably in the general range of 5 to 20MHz is passed through the ferromagnetic element, either directly or by induction. The amplitude of the current is selected so as to heat the element well above its effective Curie. An advantage of this invention over the prior art is that it may employ a much larger current than was feasible with the prior art. The current will quickly increase the temperature of the element to its effective Curie. As the element is increasing in temperature through its Curie transition the permeability of the ferromagnetic element will drop sharply. This sharp drop is sensed, and, when sensed the current to the element is cut-off. The element then cools below the effective Curie and the current is restored so as to again heat the element to its effective Curie. The process then repeats itself, hence a pulsating large current is fed to the element in such a manner as to hold its temperature fairly constant. The sharp drop in permeability may, according to this invention be sensed in several different ways. One such way is to have the winding of an auto-transformer around the ferromagnetic element. Another way is to sense the change in power drawn by the ferromagnetic element, since the device nay be so designed that the power will decline when the permeability declines. When the power sharply declines the current is cut-off for a brief period and is then restored.

Arrangements according to the invention will now be further described by way of example, and with reference to the accompanying drawings.

Figure 1 is a schematic diagram of a prior art arrangement wherein the RF current is fed through a ferromagnetic element by direct electrical connection thereto.

Figure 2 is a schematic diagram of a prior art arrangement wherein the RF current is fed through a ferromagnetic element by induction.

Figure 3 is a graph of the temperature regulation of devices of Figures 1 and 2.

Figure 4 is a schematic diagram of one form of the present invention.

Figure 5 is a schematic diagram of another form of the present invention.

Figure 6 is a schematic diagram of still another form of the present invention.

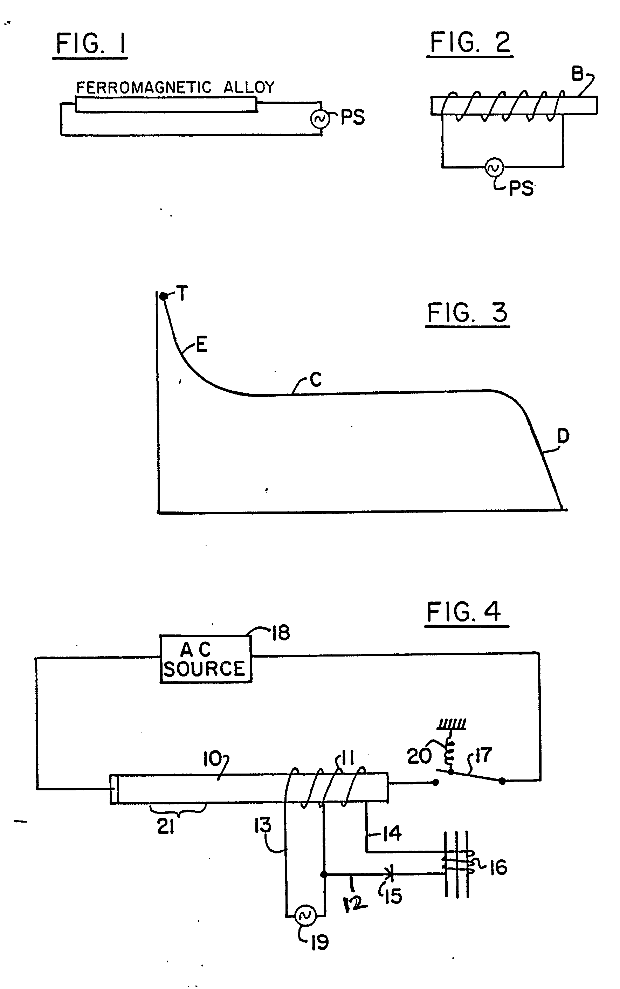

Figure 1 illustrates a prior art ferromagnetic strip B which may be 0.010 inches thick and 0.2 inches wide, composed of nickel-iron alloy having a permeability of over 100 and an effective Curie temperature in the range of 150° C or more. The constant current power supply PS is capable of delivering sufficient power to the strip to heat it well above the effective Curie temperature, for example 70° C above the effective Curie. If then the current is turned on, the strip B will be heated to temperature T (Fig. 4) which is say 70° C above the effective Curie C. If now a source of cooling fluid, for example gaseous carbon dioxide is passed over strip B in progressively increasing quantity the temperature will fall along line E to level C and will remain there until ultimately the cooling is so great that the temperature will fall off along tail line D.

Figure 2 illustrates a similar prior art arrangement in which current is induced in ferromagnetic strip B by induction. This device will function in the same way as the device of Figure 1.

In Figures 1 and 2, if the amplitude of the constant current is reduced so as to reduce the initial temperature T, say from 70° C above the effective Curie temperature, to say 10° above the effective Curie temperature, the flat part C of the curve will be greatly shortened and tail D will occur at a much smaller cooling rate.

The present invention avoids the portion E of the curve above the effective Curie temperature and also either avoids tail line D or at least postpones it to such a high cooling rate that it is no problem.

Referring to Figure 4, a ferromagneic strip or bar 10 has a diameter or thickness of at least several thousandths of an inch. The configuration of element 10 may vary depending on the desired end use. For example, if the end use is a soldering iron, element 10 may have the shape of a soldering iron.

A small pick-up coil 11 is adjacent to, or around, a part, of ferromagnetic strip, bar or rod 10. Coil 11 will function as an auto-transformer. The left half of the coil 11 is the primary and the right half of the coil 11 is the secondary. When the ferromagnetic member 10 is below Curie the primary of coil 11 is fed by a 60Hz alternating current source 19 such as the secondary of a small transformer fed by a 60Hz peer line. The voltage of source 19 may be in the range of 8 to 24 volts. The control relay 16, 17 will be energized by the voltage or current induced in the secondary of auto-transformer 11 and will close the circuit to ferromagnetic member 10 when the ferromagnetic member 10 is below Curie. That is, below Curie, the ferromagnetic member 10 has high permeability and current will be induced in the secondary of auto-transformer 11. The secondary of auto-transformer 11 applies an a.c. voltage across wires 12 and 14. This voltage is rectified by rectifier 15 and feeds relay coil 16, attracting armature 17 to close a circuit from source 18 through ferromagnetic member 10. The source may be in the range of 5 to 20 MHz, for example, and feeds sufficient RF current through member 10 to heat it well above Curie. As the member 10 is heated near or above Curie the auto-transformer 11 is no longer effective since the permeability of member 10 has dropped toward unity, hence the voltage in the secondary of the auto-transformer falls. Then, the relay coil 16 is deenergized and armature 17 opens the circuit under the pull of spring 20. Next, the current to the ferromagnetic member 10 from R.F. source 18 is cut off. The ferromagnetic member 10 then cools and when its temperature falls below Curie the auto-transformer 11 again becomes operative due to the high permeability of member 10. The secondary of auto-transformer 11 now puts out full voltage, the relay 16, 17 closes and current from source 18 is again passed' through member 10 to heat it above Curie. The cycle then repeats over and over.

Solid state controls may replace parts 15, 16, 17.

The member 10 may be of high permeability such as Invar, Alloy 42, or a ternary alloy composed of 45% nickel, 46% iron and 9% molybdium.

The parameters such as the amplitude of the current from source 18, time delay etc. of relay 16, 17 may be selected so that the relay 16, 17 opens and closes rapidly (several times a second). In the solid state version, the time delay of the parts will be selected to get the proper frequency for the opening and closing of the solid state switch corresponding to relay 16, 17. If then there is a high rate of extraction of heat from member 10 the relay 16, 17 will be closed longer than it is open etc. But if one section 21 of the member 10 has much more heat extracted therefrom than is extracted from other equally wide sections, the section 21 will receive more heat from the current as will be explained. In such case, the section 21 will remain far below Curie and will not rise above Curie when the relay armature 17 is closed. Therefore, the skin depth of the current in section 21 will remain smaller than for the remainder of member 10. Hence, section 21 will have higher resistance per unit of length than the rest of member 10. Since the same current traverses the entire length of member 10, section 21 will get more heat per unit length, and thus provide more heat to offset the fact that there is greater extraction of heat from section 21.

R.F. source 18 may be a constant current source but this is not necessary. The fact that it is disconnected from the load above Curie is sufficient control over the current.

A key point is that means are employed to detect the transition from below to above Curie and in response to detecting that transition the current thru the ferromagnetic bar is cut off. If the device is arranged to cycle on and off, and if the "off" periods are kept of short, the device should hold its temperature quite constant.

In connection with Figure 4, it is preferable for the relay 16, 17 to completely disconnect the source 18 from the ferromagnetic strip 10. However, it would not depart from the broader aspects of the invention to reduce the current to the ferromagnetic element 10, when relay 16, 17 opens, instead of cutting the current clear off. This may be accomplished by placing a resistor across the contacts of relay 16, 17.

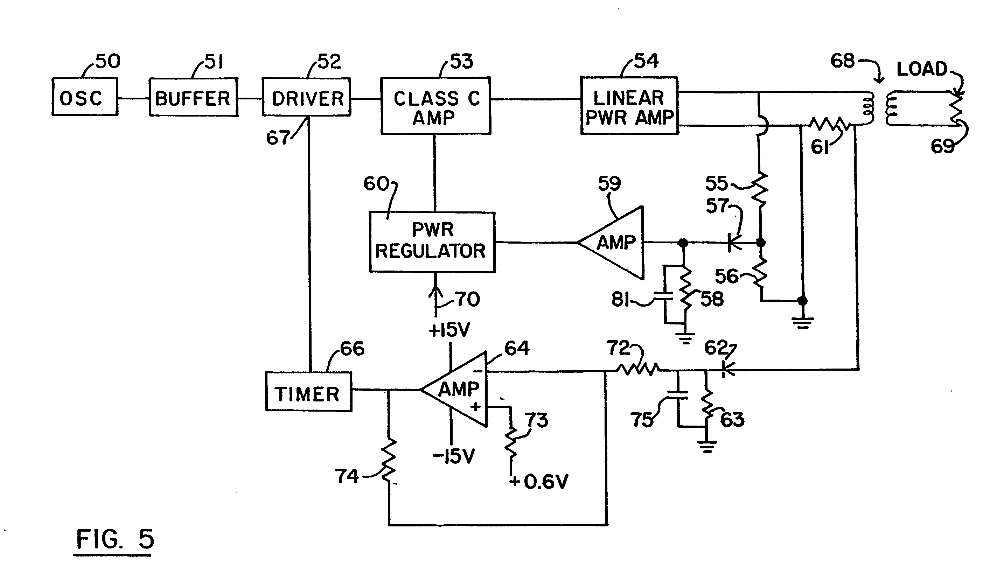

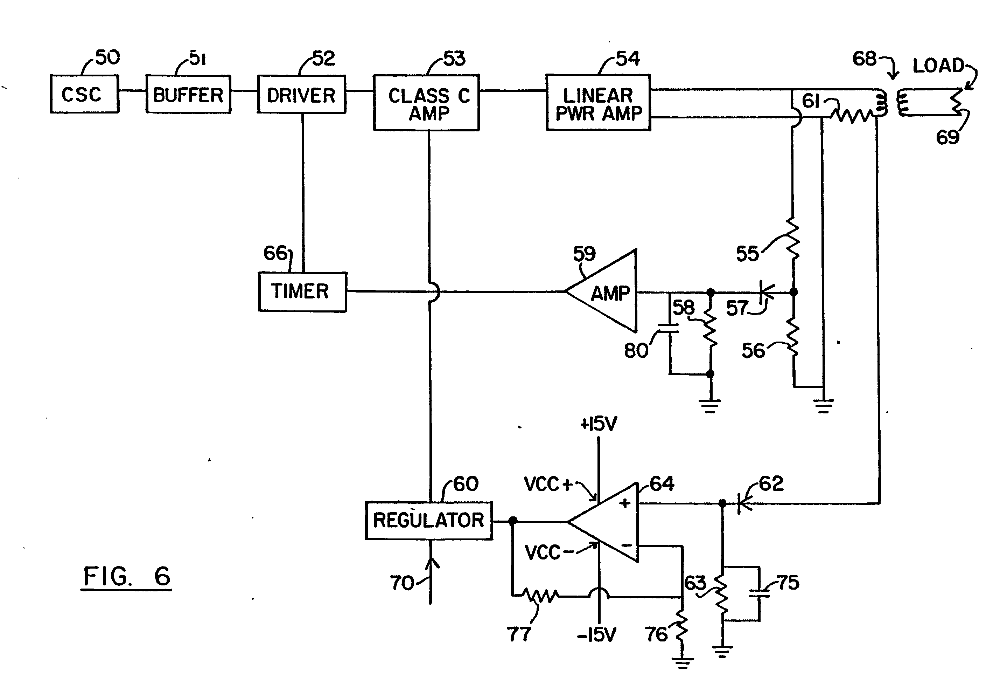

Figures 5 and 6, illustrate a different way of sensing the Curie transition. In those figures the change in power, that occurs when the temperature increases through the Curie transition is sensed, and in response to sensing that change in power, the current to the ferromagnetic element is either cutoff or reduced.

In both Figures 5 and 6 the load 69 is the high permeability ferromagnetic element and may have the composition, shape, and size described above, or as desired for any given end use.

Figure 5 illustrates a constant voltage power supply for use with the invention. This power supply has conventional oscillator 50, conventional buffer 51, conventional driver 52, and conventional class C amplifier 53, stages. While a wide variety of such equipment is available, one suitable form is shown in The ARRL 1985 Handbook (62nd Ed., 1985), published by the American Radio Relay League, Chapter 30, pages 30-24 to 30-26. A copy of the applicable pages of this handbook is being filed with this application. The driver 52 has an input 67 to key the same on and off and this corresponds to the key jack J1 on page 30-24 of said handbook. Preferably, the driver 52 is keyed by the contacts of a small fast electromagnetic relay (not shown) in a conventional fashion; the relay coil being energized by input 67.

The linear power amplifier 54 may be any, of many, suitable linear power amplifiers, for example it may be the 140 Watt Solid State Linear Amplifier, shown on pages 30-27 to 30-30 of said ARRL 1985 Handbook. See also the Motorola RF Data Manual (3rd. Ed., 1983), pages 4-194 to 4-199. The output of linear power amplifier 54 is fed through resistor 61, which feeds impedance matching transformer 68 which in turn feeds the load 69.

The voltage at the output of the linear power amplifier 54 is held constant by the components 55-60 as follows. Resistors 55 and 56 form a voltage divider across the output of power amplifier 54. The diode 57 feeds resistor 58 and capacitor 81, and amplifier 59, so that the output of the latter reflects the voltage at the output of power amplifier 54. That output feeds power regulator 60 which may be Texas Instruments Inc. Type LM 117, described on pages 99 to 103 of The Voltage Regulator Handbook published by Texas Instruments, Inc. A copy of the applicable pages of this handbook are being filed with this application. This regulator 60 controls the main power input circuit 70 to the Class C amplifier 53 to thus raise or lower the output voltage thereof as necessary to keep the output voltage of linear amplifier 54 fairly constant. This regulator 60 has a built-in conventional standard voltage reference source which is compared with the voltage at the output of amplifier 59, and the regulator 60 then functions to hold the voltage at the output of linear amplifier 54 constant.

If now the impedance of ferromagnetic load element 69 drops due to a rise in temperature through the Curie transition, the current through resistor 61 increases and the voltage at the input of diode 62 increases thereby increasing the voltage at the negative (-) input of operational amplifier 64, the output of which feeds timer 66 with a decreasing voltage which in turn opens the circuit at input 67 of driver 52 turning off the driver 52, the Class C amplifier 53 and the linear power amplifier for a time interval between 0.1 and 0.5 seconds; this time period being manually adjustable by varying said timer 66. At the end of the selected time interval the driver 52 is turned on by timer 66 and power to the load 69 resumes. Current will again flow through resistor 61 to feed the load 69 and when the load impedance again drops the above process will repeat itself shutting off the power. In this way the power to the load 69 will pulsate as required.

Timer 66 has a built in standard reference voltage which is compared with the voltage at the output of amplifier 64, and the timer is triggered to start its time period when the voltage at the output of amplifier 64 increases above the standard reference voltage. When this happens the timer 66 opens the keying circuit 67 to cut-off all power at the output of linear amplifier 54.

Figure 6 illustrates a constant current power supply suitable for use with the invention.

The components for the constant current supply of Figure 6 are basically the same as for the constant voltage supply of Figure 5, and like reference numbers are used to represent like parts.

The power generating stages 50 to 54 in Figure 6 are essentially the same as for Figure 5, although they are controlled in a different way; and therefore it is unnecessary to further describe those stages.

The current from the output of power amplifier 54 to the load 69 is held constant by components 60, 62, 63 and 64 as follows. When the current through resistor 61 increases the voltage drop across that resistor 61 is fed to the input of operational amplifier 64 whose output controls power regulator 60 (which may be Texas Instruments, Inc. Type LM 117 described above). The power regulator 60 controls the voltage fed to

4

Class C amplifier 53 to thus hold the output current of power amplifier 54 constant. As stated in connection with Figure 5 the regulator 60 has a built-in standard reference voltage which is compared with the voltage at the output of amplifier 64, and the regulator 60 functions to keep the two voltages the same and thus keep the current at load 69 constant.

When the load resistance of the load 69 (Fig.6) falls, due to a rise in temperature through the Curie transition, the voltage at the output of peer amplifier 54 also falls (due to the constant-current circuit 60, 62, 63, 64), and this voltage drop is sensed at the positive (+) input of operational amplifier 59. The change in output of that amplifier is sensed by timer 66 (this being the same as the 555 timer referred to in connection with Figure 5) which then opens the keying circuit 67 of driver 52 and shuts off all power at the output of power amplifier for a time interval between 0.1 and 0.5 seconds (the timer 66 may be provided with a manual adjustment to enable one to select the time interval he wants). When the time interval is up, the power is restored and the cycle repeats itself. This continues as long as desired, with the result that a pulsating current is applied to the load 69. As stated in conjunction with Figure 5, the timer 66 has a built-in standard reference voltage which is compared with the voltage at the output of amplifier 59. When the voltage at the output of amplifier 5° drops below the reference voltage, the timer 66 cuts-off driver 52 for a predetermined time interval as explained in connection with Figure 5.

The operational amplifiers 59 and 64 of both Figures 5 and 6 may be Type uA741M or uA741C, manufactured by Texas Instruments, Inc., and a data sheet describing these amplifiers is being filed with this application.

The timer 66 of both Figures 5 and 6 may be Type 555 manufactured by Texas Instruments, Inc., and the manufacturer's data sheet for this timer 66 is being filed with this application. When this form of timer is used the input signal is fed into the Trigger (pin 2) of the timer 66.

The impedance matching transformer 68 in both Figures 5 and 6 may be designed and/or selected according to conventional practices such as those described in said Motorola RF Device Data manual pages 4-145 to 4-153, or said ARRL 1985 Handbook, Figure 44, page 30-28.

The resistance values of the various resistors may be as follows; it being understood of course that changes are necessary for different designs:

| Resistor | Ohms |
| --- | --- |
| 55 | 1000 |
| 56 | 10 |
| 58 | 5600 |
| 61 | 0701 |
| 63 | 5600 |
| 72 | 1000 |
| 73 | 5900 |
| 74 | 56000 |
| 76 | 7800 |
| 77 | 20000 |

Capacitors 75, 80 and 81 may have a capacity of 0.001 mfd.

In connection with Figures 4, 5 and 6 it is noted that the current fed to the load 10 or 69, as the case may be, is not limited by the permissible temperature T (Fig. 3). The current that may be applied to the load 10 or 69 may be much higher than is permissible with Figures 1 and 2 or with any other known prior art. If a very large cooling load is applied to ferromagnetic elements 10 or 69, the heavy current to those elements will be on a much larger percentage of the time than will be the cafe for a small cooling load. For example, if the cooling load is light, the heavy current will quickly reheat the ferromagnetic load element 10 or 69, after the current is restored by the closing of relay 16, 17 or by the expiration of the time interval of timer 66. But if the cooling load is very heavy the time period for heating the ferromagnetic load element after the current is turned on will be longer than was the case for the light load.

Thus, with the present invention, instead of the curve T,E,C, D of Figure 3, which is typical of the prior art, the curve would consist of a single horizontal substantially straight line at the effective Curie temperature C.

Another advantage of the invention over the prior art referred to above, is that it will work over a very wide band of frequencies. For example, the device of Figure4 , will work, even if power supply 18 has an output frequency as low as 60 Hz or even lower. In such a case the invention would lose the value of

EP 0 404 209 A1

providing greater heat to a limited section 21 (Fig. 4), that is cooled more than other sections, if the strip or bar 10 or 69, is of small size.

The feature of providing increased heating to a limited section such as 21, is applicable to all forms of the invention (Figures 4, 5 and 6), if the frequency is high enough to provide the necessary change in skin depth. However, in connection with Figures 5 and 6 the frequency and the size of the ferromagnetic element should be so related that there is a substantial change in skin depth, due to the change in permeability, as the temperature goes through the Curie transition if a section such as 21 is to get added heat when it is cooled. A strip several thousandths of an inch thick will meet this requirement in the 8-20 MHz range. For any frequency the ferromagnetic load may be several skin depths thick, for example, to meet this requirement.

The change in skin depth during the Curie transition will result in a change in resistance of the load 69, which will result in a change in power, which is sensed and used as a control parameter.

The invention has end uses wherever it is desired to hold the temperature of a strip, rod, bar, or other configuratic constant. One such use for example is in soldering as it is often undesirable to overheat apparatus being soldered. Hence, the ferromagnetic element 10 or 69 may be all or part of an element being soldered, or it may be located in contact with an element being soldered.

The ferromagnetic elements 10 or 69 may also be used as heaters to heat chemicals to make sure that chemical reactions occur at predetermined constant temperatures.

## Claims

1. The method of temperature regulation comprising:
providing an element composed of material having a parameter which changes in a predetermined way in response to an increase in temperature to a given temperature,
passing an electric current, of sufficient amplitude which if fed through said element for a prolonged period will heat said element well above said given temperature,
sensing said change in said predetermined way and reducing or turning off the flow of said current through said element in response to said change,
restoring said amplitude of said current to said element after a selected predetermined time,
said sensing and restoring steps recurring alternately at such a rate as to provide a pulsating current that holds said element at about said given temperature and at all times prevents a rise in the temperature of said element substantially above said given temperature.

2. Temperature regulating apparatus, comprising:
an electrical conducting element having a parameter that changes in a predetermined way as the temperature of the element rises to a given temperature,
power delivery means feeding an electric current through said element of sufficient amplitude that if maintained indefinitely would heat said element far above said given temperature, and
means for repeatedly (a) sensing a change in said predetermined way and reducing or turning off said electric current to said element in response to the sensing of a change in said predetermined way during an increase in temperature of said element, and (b) subsequently restoring after a predetermined time interval said amplitude of said electric current to said element, to thereby produce a pulsating current that holds said element at about said given temperature.

6

## FIG. 1

FERROMAGNETIC ALLOY

PS

## FIG. 2

B

PS

## FIG. 3

T

E

C

D

## FIG. 4

AC SOURCE — 18

10

11

20    17

21

13

14

16

12    15

19

FIG. 5

FIG. 6

## DOCUMENTS CONSIDERED TO BE RELEVANT

EP 90115677.8

| Category | Citation of document with indication, where appropriate, of relevant passages | Relevant to claim | CLASSIFICATION OF THE APPLICATION (Int. Cl.5) |
|---|---|---|---|
| D,A | US - A - 4 256 945 (CARTER) * Abstract; column 1, line 66 - column 3, line 29; claim 1; fig. 1-3 * | 1,2 | H 05 B 1/02 G 05 D 23/19 H 05 B 6/06 |
| A | US - A - 4 002 882 (MC CUTCHEN) * Abstract; column 2, lines 9-27; fig. 1 * | 1,2 | |
| A | US - A - 4 507 546 (FORTUNE) * Abstract; claim 1; fig. 2 * | 1,2 | |
| A | US - A - 3 924 102 (HANEKOM) * Abstract; claim 1; fig. * | 1,2 | |
| P,A | US - A - 4 546 238 (AHS) * Abstract; claim 1; fig. * | 1,2 | TECHNICAL FIELDS SEARCHED (Int. Cl.5) |
| A | DE - B2 - 2 806 159 (SIEMENS) * Claims * | 1,2 | G 05 D 23/00 H 05 B 1/00 H 05 B 3/00 H 05 B 6/00 |

The present search report has been drawn up for all claims

| Place of search | Date of completion of the search | Examiner |
|---|---|---|
| VIENNA | 15-10-1990 | KRAL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................
& : member of the same patent family, corresponding document